# EUROPÄISCHE PATENTANMELDUNG

(11) **EP 1 321 846 A2**
(43) Veröffentlichungstag der Anmeldung: **25.06.2003**
(21) Anmeldenummer: 02025346.4
(22) Anmeldetag: 13.11.2002
(51) Int. Cl.: G06F 1/32

(54) **Verfahren zur Steuerung eines einen Mikrocontroller enthaltenden sicherheitskritischen Systems**

(30) Priorität: 20.12.2001 DE 10163153
(71) Anmelder: SIEMENS AKTIENGESELLSCHAFT, 80333 München (DE)
(72) Erfinder: Henninger, Michael, 65779 Kelkheim (DE)

(57) **Zusammenfassung**

Die Erfindung betrifft ein Verfahren zur Steuerung eines einen Mikrocontroller enthaltenen sicherheitskritischen Systems, insbesondere eines Kraftfahrzeuges, wobei der Mikrocontroller die Betriebsabläufe des sicherheitskritischen Systems steuert und/oder regelt und der Mikrocontroller aus einem Mikroprozessor und mindestens einer peripheren Mikroprozessoreinrichtung besteht. Bei einem Verfahren zur Steuerung eines sicherheitskritischen Systems, bei welchem Störungen der Betriebssicherheit durch Änderung in der Molekularbewegung des Trägers des Mikroprozessors ausgeschlossen werden sollen, wird während eines Betriebs- und/oder Programmablaufes eine Chiptemperatur eines den Mikroprozessor und periphere Einrichtung gemeinsam tragenden Chips gemessen und mit einer maximal zulässigen Chiptemperatur des Mikrocontrollers verglichen, wobei der Betriebs- und/oder der Programmablauf in Abhängigkeit des Temperaturvergleichs gesteuert wird.

## Beschreibung

Die Erfindung betrifft ein Verfahren zur Steuerung eines ein Mikrocontroller enthaltenden sicherheitskritischen Systems, insbesondere eines Kraftfahrzeuges, wobei der Mikrocontroller die Betriebsabläufe des sicherheitskritischen Systems steuert und/oder regelt, und der Mikrocontroller aus einem Mikroprozessor und mindestens einer peripheren Microprozessoreinrichtung besteht.

Betriebsabläufe eines Kraftfahrzeuges werden von Steuergeräten gesteuert bzw. geregelt, deren Herzstück ein Mikrocontroller ist. Der Mikrocontroller enthält dabei Steuerdaten, die das Steuerprogramm benötigt, um den Betriebsablauf bestimmter Einrichtungen des Fahrzeuges zu gewährleisten. Darüber hinaus können sich während der Lebensdauer eines Steuergerätes auch die Betriebsparameter der von diesen Steuergerät zu steuernden Vorrichtung ändern und müssen daher ständig neu ermittelt und im Mikrocontroller abgespeichert werden. Darüber hinaus ist auch eine Anpassung der Steuerprogramme an Änderungen der Betriebsparameter der zu steuernden Vorrichtung notwendig.

Die Anpassung der Vielzahl von Daten muß während der Lebensdauer des Kraftfahrzeuges so erfolgen, das die Betriebssicherheit des Kraftfahrzeuges nicht gefährdet ist, da eine Fehlsteuerung des Mikroprozessors zu verkehrsbedrohlichen Situationen im Kraftfahrzeug führen kann.

Da die Arbeitsweise des Mikrocontrollers entscheidend von der Molekularbewegung des die Elektronik tragenden Halbleitermaterials abhängt, führen Temperaturänderungen in der Umgebung des Mikrocontrollers zu Fehlfunktionen des Mikrocontrollers und somit zu Störungen in Betriebsabläufen des Kraftfahrzeuges.

Der Erfindung liegt somit die Aufgabe zugrunde, ein Verfahren zur Steuerung eines sicherheitskritischen Systems wie einen Kraftfahrzeug anzugeben, bei welchen Störung der Betriebssicherheit durch Änderungen in der Molekularbewegung des Trägers des Microprozessors ausgeschlossen sind.

Die Erfindung wird dadurch gelöst, dass während eines Betriebs- und/oder Programmablaufes eine Chiptemperatur eines den Mikroprozessor und die periphere Einrichtung gemeinsam tragenden Chips gemessen und mit einer maximal zulässigen Chiptemperatur des Mikrocontrollers verglichen wird, wobei der Betriebs- und/oder der Programmablauf in Abhängigkeit des Temperaturvergleichs gesteuert wird.

Der Vorteil der Erfindung besteht darin, dass durch die Messung der Chiptemperatur des aus dem Halbleitermaterial bestehenden Chips Rückschlüsse auf die Molekularbewegung des Halbleitermaterials geschlossen werden können. Dadurch ist einfach feststellbar, wann sich der Mikrocontroller in dem Bereich bewegt, in welchem seine Arbeitsabläufe gestört werden.

So kann in einer Weiterbildung der Erfindung bei Überschreitung der maximalen Chiptemperatur der Betriebs- und/oder Programmablauf unterbrochen werden. In einer Ausführung wird die gemessene Chiptemperatur einer externen Auswerteeinrichtung zugeführt, welche den Temperaturvergleich durchführt und durch Zuführung eines externen Signals den Betriebs- und/oder Programmablauf des Mikrocontrollers blockiert. Die externe Auswerteeinrichtung kann dabei mittels Software entscheiden, ob der Mikrocontroller weiter arbeiten soll.

Eine weitere Ausgestaltung ermöglicht es, dass die gemessene Chiptemperatur auf dem Chip selbst in eine Spannungsänderung umgewandelt wird, wobei der Temperaturvergleich durch eine im Mikrocontroller selbst angeordnete Vergleicherschaltung durchgeführt wird. Durch diese hardwaremäßige Blockierung, welche im einfachsten Falle eine Komparatorschaltung darstellt, wird die Arbeitsweise des Mikrocontrollers sofort unterbrochen.

Vorteilhafterweise wird die Chiptemperatur durch Regelung der Betriebsabläufe des sicherheitskritischen Systems unterhalb der maximalen Chiptemperatur eingestellt. Dies ist insbesondere bei solchen Systemen günstig einsetzbar, die selbst für die steigende Umgebungstemperaturen des Microcontrollers verantwortlich sind.

In einer Ausgestaltung steuert der in unmittelbarer Nähe zu einer Verlustleistung produzierenden Einrichtung angeordnete Mikrocontroller bei Überschreitung der zulässigen Chiptemperatur die Verlustleistung produzierende Einrichtung der Art an, dass die Verlustleistung reduziert und als Folge die Chiptemperatur vermindert wird. Mit dieser Vorgehensweise wird erreicht, dass bei einem ständig an der maximalen Junctiontemperatur arbeitenden Mikrocontroller das sicherheitskritischen System weiter im Betrieb bleiben kann und Fehlfunktionen des Kraftfahrzeuges ausgeschlossen sind.

In einer anderen Weiterbildung wird in Abhängigkeit von der Chiptemperatur die Neuprogrammierung eines auf dem Chip angeordneten, die periphere Mikroprozessoreinrichtung bildenden Flashspeichers überwacht. Da aufgrund dieser Temperaturüberwachung die maximale Flashtemperatur überwacht wird, ist ein zuverlässiger Datenerhalt beim Flashen (Data Retention) gewährleistet. Soll nun im Service über ein Diagnose-Tool der Controller neu geflasht werden, kann die Temperatur des Controllerchips per Software abgefragt und bei Überschreitung der maximalen Flashtemperatur ein Flashen verhindert werden. Bei Schnittstellen, wie zum Beispiel der JTAG-Schnittstelle kann ein Flashen des Controller nur per Hardware auf dem Chip direkt verhindert werden.

Die Verwendung eines Regelkreises führt insbesondere dazu, dass Fertigungsfehler, wie zum Beispiel Chargenstreuungen, ausgeglichen werden können.

Eine direkte Temperaturmessung der Chiptemperatur ist nicht nur für Automotive, sondern auch für andere industrielle Anwendungen denkbar.

Die Erfindung läßt zahlreiche Ausführungsformen zu. Eine davon soll anhand der in der Zeichnung dargestellten Figuren näher erläutert werden.

Es zeigt:
- Fig. 1:: elektrische Lenkhilfe
- Fig. 2:: Steuergerät der elektrischen Lenkhilfe.

Die Erfindung soll am Beispiel einer elektrischen Lenkhilfe erläutert werden. Eine das Lenkrad 1 tragende Lenksäule 2 greift in ein Lenkgetriebe 3 ein, welches über ein Lenkgestänge 4 die beiden Vorderräder 5 und 6 eines nicht weiter dargestellten Kraftfahrzeuges bewegt. An der Lenksäule 2 ist ein Lenkmomentensensor 7 angeordnet, der über die Leitung 8 mit einem Steuergerät 9 verbunden ist. Am Lenkgetriebe 3 ist ein linearer Wegsensor 10 angeordnet, welcher über die Leitung 11 Sensorsignale, die den Drehwinkel der Lenksäule 2 entsprechen, an das Steuergerät 9 ausgibt.
Ein Elektromotor 12 ist über ein Kugelumlaufgetriebe 13 mit der Zahnstange 14 des Lenkgetriebes 3 verbunden. Darüber hinaus wird über eine weitere Leitung 15 die von einem Motorpositionssensor 16 detektierte Stellung des Elektromotors 12 an das Steuergerät 9 gemeldet.

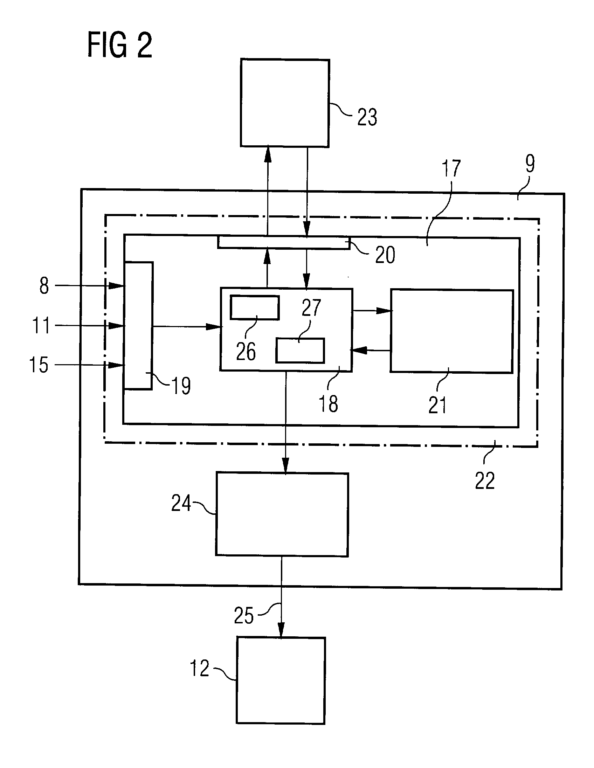

Das Steuergerät 9, dessen prinzipieller Aufbau in Figur 2 dargestellt ist, weist als Kerneinheit einen Mikrocontroller 17 auf. Dieser Mikrocontroller 17 besteht aus einem Mikroprozessor 18, einen AD-Wandler 19, einer Diagnoseschnittstelle 20 sowie einem als Flashspeicher ausgebildeten NV-RAM 21, die alle auf einem gemeinsamen Siliziumchip 22 angeordnet.

Der Mikroproprozessor 18 ist über die Diagnoseschnittstelle 20 mit einem Diagnosegerät 23 verbunden und kann mit diesem bidirektional Daten austauschen. Außerhalb des Mikrocontrollers 17 aber innerhalb des Steuergerätes 9 darüber hinaus eine Motorendstufe 24 angeordnet, welche über eine leitung 25 mit dem Elektromotor 12 verbunden ist. An den A/D-Wandler 19 führen die Leitungen 8, 11 und 15.

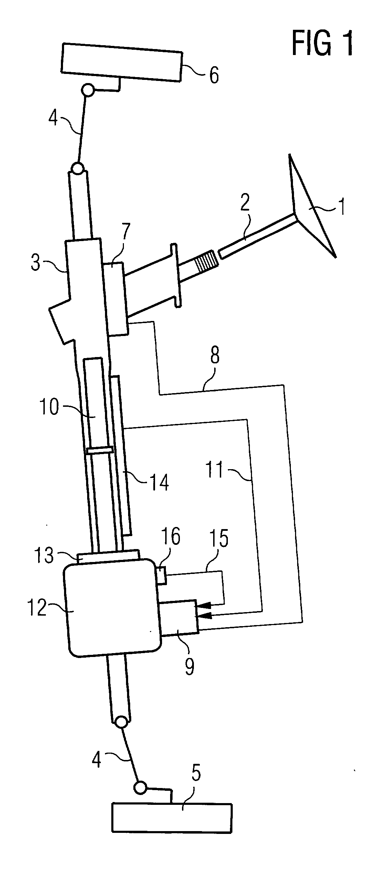

Wie aus Fig. 1 ersichtlich, ist das Steuergerät 9 direkt in baulichem Kontakt zum Elektromotor 12 angeordnet. Dieser bauliche Kontakt führt dazu, dass die bei der Betätigung des Lenkrades 1 zur Unterstützung der Lenkung der Elektromotor 12 in Betrieb genommen wird. Die dabei entstehenden Verlustwärme wird direkt an das Steuergerät 9 abgegeben und führt zu einer Veränderung der Chiptemperatur des Chips 22. Insbesondere beim Stressen der Lenkung wird die Erwärmung zunehmen und die Molekularbewegung des Chips beeinflusst.
Darüber hinaus führt aber auch schon die Anordnung der Motorendstufe 24 im Steuergerät 9 auf Grund der für die Motoransteuerung notwendigen hohen Ströme zu einer Erwärmung des Chips 22.

Sollen nun in den Schreib-Lese-Speicher 21, welcher als Flash-Speicher ausgebildet ist, ein neues Betriebsprogramm bzw. neue Betriebsdaten eingeschrieben werden, muß sichergestellt sein, dass die Daten auch erhalten bleiben. Aus diesem Grunde ist in dem Mikroprozessor 18 eine Temperaturmeßschaltung 26 enthalten. Vor jeder Neuprogrammierung wird ein Temperatursignal über die Diagnoseschnittstelle 20 an das Diagnosegerät 23 ausgegeben. Dieses Diagnosegerät 23 bewertet die Chiptemperatur mit einer in ihm abgespeicherten maximalen Flashtemperatur. Ist die gemessene Chiptemperatur kleiner als die maximale Flashtemperatur, wird der Flashvorgang eingeleitet und neue Programmdaten in dem Flashspeicher eingeschrieben. Stellt das Diagnosegerät 23 fest, dass das Controllerchip 22 seine Temperatur überschritten hat, wird bei Überschreiten der maximalen Flashtemperatur ein Flashen verhindert.
Bei der Verwendung von sehr schnellen Schnittstellen wie zum Beispiel der JTAG-Schnittstelle ist eine Verhinderung des Flashens durch Software nicht möglich, so dass eine Blockierschaltung in Form eines Komparators 27 in der Controllerschaltung 17 notwendig ist.

Bei der Anordnung des Mikrocontrollers 17 in einem System, welches selbst für die erzeugte Verlustleistung zuständig ist, wie es im Fall der erläuterten Lenkhilfe zutrifft, reduziert der Mikrocontroller 17 bei Überschreitung der Chiptemperatur die Ansteuerung des Motors 12, welche meist in Form von PWM-Signalen erfolgt. Mit Hilfe eines Regelkreises, bei welchem die tatsächliche Chiptemperatur mit der maximal zulässigen Mikrocontrollertemperatur verglichen und in Abhängigkeit von diesem Vergleich das PWM-Signal eingestellt wird, wird die Chiptemperatur nahe unterhalb der zulässigen Temperaturhöchstgrenze eingestellt ohne dass das sicherheitskritische System abgeschaltet werden muß.

Die beschriebene Erfindung ist aber nicht nur auf elektrische Lenkhilfen anwendbar, sondern auch für Nebenaggregate, die im Motorraum angeordnet sind. So sind beispielsweise für Wasserpumpen, die die Drehzahl des Motors beeinflussen, eben solche Nachheizeffekte denkbar. Aufgrund von Nachheizeffekten ist die Anlauftemperatur des Mikrocontrollers sehr hoch, so dass in dem Startvorgang Fehlfunktionen des Mikrocontrollers 17 auftreten können, was durch die Temperaturüberwachung zuverlässig verhindert wird. Aufgrund des erfindungsgemäßen Verfahrens wird der Widerspruch zwischen hoher Chiptemperatur zu der für die Betriebsbedingung notwendigen Controllertemperatur zuverlässig eingestellt.

## Patentansprüche

1. Verfahren zur Steuerung eines einen Mikrocontroller enthaltenden sicherheitskritischen Systems, insbesondere eines Kraftfahrzeuges, wobei der Mikrocontroller die Betriebsabläufe des sicherheitskritischen Systems steuert und/oder regelt und der Mikrocontroller aus einem Microprozessor und mindestens einer peripheren Microprozessoreinrichtung besteht, **dadurch gekennzeichnet, dass** während eines Betriebs- und/oder Programmablaufes des Mikrocontrollers eine Chiptemperatur eines den Mikroprozessor und die periphere Einheit gemeinsam tragenden Chips gemessen und mit einer maximal zulässigen Chiptemperatur des Mikrocontrollers verglichen wird, wobei der Betriebs- und/oder Programmablauf in Abhängigkeit des Temperaturvergleichs gesteuert wird.

2. Verfahren nach Anspruch 1, **dadurch gekennzeichnet, dass** bei Überschreitung der maximalen Chiptemperatur der Betriebs- und/oder Programmablauf des Mikrocontrollers unterbrochen wird.

3. Verfahren nach Anspruch 2, **dadurch gekennzeichnet, dass** die gemessene Chiptemperatur einer externen Auswerteeinrichtung zugeführt wird, welche den Temperaturvergleich durchführt und den Betriebs- und/oder Programmablauf des Mikrocontrollers durch Zuführung eines externen Signals blockiert.

4. Verfahren nach Anspruch 2, **dadurch gekennzeichnet, dass** die gemessene Chiptemperatur auf dem Chip selbst in eine Spannungsänderung umgewandelt wird, wobei der Temperaturvergleich im Mikrocontroller selbst durchgeführt wird.

5. Verfahren nach Anspruch 1, **dadurch gekennzeichnet, dass** die Chiptemperatur des Microcontrollers durch Regelung der Betriebsabläufe des sicherheitskritischen Systems unterhalb der maximalen Chiptemperatur eingestellt wird.

6. Verfahren nach Anspruch 5, **dadurch gekennzeichnet, dass** der in unmittelbarer Nähe zu einer Verlustleistung produzierenden Einrichtung angeordnete Mikrocontroller bei Überschreitung der zulässigen Chiptemperatur die Verlustleistung produzierenden Einrichtung derart ansteuert, dass die Verlustleistung reduziert und als Folge die Chiptemperatur reduziert wird.

7. Verfahren nach Anspruch 2 oder 5, **dadurch gekennzeichnet, dass** in Abhängigkeit von der Chiptemperatur die Neuprogrammierung eines auf dem Chip angeordneten, die periphere Mikroprozessoreinrichtung bildenden Flash-Speichers überwacht wird.
